Europäisches Patentamt

European Patent Office

Office européen des brevets

(11) Veröffentlichungsnummer : **0 308 470 B1**

(12) **EUROPÄISCHE PATENTSCHRIFT**

(45) Veröffentlichungstag der Patentschrift :
**12.08.92 Patentblatt 92/33**

(51) Int. Cl.⁵ : **B01D 46/04, B01D 46/46**

(21) Anmeldenummer : **88903224.9**

(22) Anmeldetag : **30.03.88**

(86) Internationale Anmeldenummer :
**PCT/EP88/00264**

(87) Internationale Veröffentlichungsnummer :
**WO 88/07404 06.10.88 Gazette 88/22**

(54) **VERFAHREN ZUM ENTSTAUBEN EINES STAUBHALTIGEN GASES MITTELS FÜR DAS GAS DURCHLÄSSIGER FILTERELEMENTE.**

(30) Priorität : **30.03.87 DE 3709990**
**05.06.87 DE 3718846**

(43) Veröffentlichungstag der Anmeldung :
**29.03.89 Patentblatt 89/13**

(45) Bekanntmachung des Hinweises auf die
Patenterteilung :
**12.08.92 Patentblatt 92/33**

(84) Benannte Vertragsstaaten :
**DE FR GB IT SE**

(56) Entgegenhaltungen :
**DE-A- 2 529 464**
**DE-A- 3 336 487**
**US-A- 4 277 255**
**US-A- 4 500 326**
**US-A- 4 645 520**

(73) Patentinhaber : **L. & C. Steinmüller GmbH**
**Postfach 10 08 55**
**W-5270 Gummersbach 1 (DE)**

(72) Erfinder : **PITT, Reinhold, Ulrich**
**Kirchrather Str. 18**
**W-5100 Aachen (DE)**
Erfinder : **STEVEN, Hubert**
**Beethovenstr. 15**
**W-5270 Gummersbach 1 (DE)**

(74) Vertreter : **Carstens, Wilhelm, Dipl.-Phys.**
**L. & C. Steinmüller GmbH Patentabteilung**
**Postfach 10 08 55/10 08 65**
**W-5270 Gummersbach 1 (DE)**

Jouve, 18, rue Saint-Denis, 75001 PARIS

**Beschreibung**

**Verfahren zum entstauben eines staubhaltigen Gases mittels für das Gas durchlässiger Filterelemente**

Die Erfindung betrifft ein Verfahren zum entstauben eines staubhaltigen Gases mittels mindestens eines Behälters und in diesem angeordneter und für Gas durchlässiger Filterelemente, bei dem die Filterelemente von außen nach innen von dem Gas durchströmt werden und der Staub auf der Außenfläche der Filterelemente abgelagert wird und der abgelagerte Staub durch auf das Innere der Filterelemente aufgebrachte Druckgasimpulse von den Filterelementen abgereinigt wird, wobei die über die Filterelemente anstehende Druckdifferenz gemessen wird und für den Behälter zusätzlich zu der Druckdifferenz über die Filterelemente der Volumenstrom des zu reinigenden Gases bestimmt wird und der Reinigungsimpuls ausgelöst wird, wenn das bei der Ausbildung der Staubschicht über die Zeit anwachsende Verhältnis von Druckdifferenz und Volumenstrom mindestens einen Grenzwert erreicht hat.

Aus der US-A-4,277,255 ist ein solches Verfahren bekannt.

Bei einer Vielzahl von parallel beaufschlagten und getrennte Filtereinheiten darstellenden Behältern mit in ihnen angeordneten Filterelementen könnte die sich über den einzelnen Behälter einstellende Druckdifferenz durch die Druckdifferenz über die in dem Filter angeordneten Filterelemente und durch die Druckdifferenz bestimmt werden, die dem einzelnen Behälter infolge der erforderlichen Verteiler, Sammler und Verbindungskanäle zuzuordnen ist. Infolge einer unterschiedlichen Abscheidung von Staub auf den Filterelementen der verschiedenen Behälter stellt sich dann eine Ungleichverteilung des zu reinigenden Rauchgases auf die verschiedenen Behälter ein. Wenn nun die Behälter unabhängig voneinander und in zeitlicher Reihenfolge nacheinander abgereinigt werden, besteht die Gefahr, daß aufgrund der erhöhten Strömungsgeschwindigkeit durch den gerade gereinigten Behälter die auf die Druckdifferenz der Roh- und Reingaskanäle, Verteiler und Sammler zurückzuführende Druckdifferenz unnötig ansteigt.

Es ist daher die Aufgabe der vorliegenden Erfindung, ein gattungsgemäßes Verfahren anzugeben, bei dem bei Anwendung auf eine Vielzahl von Behältern möglichst eine Gleichverteilung der zu entstaubenden Gase auf die Filterbehälter und damit die niedrigst mögliche Geschwindigkeit erreicht wird.

Diese Aufgabe wird dadurch gelöst, daß bei einer Vielzahl von mit Teilströmen des zu reinigenden Gases parallel beaufschlagten Behältern die bei der Ausbildung der Staubschicht über die Zeit anwachsenden Verhältnisse von Druckdifferenz und der Volumenströme der einzelnen Teilströme erfaßt werden und bei Erreichung eines durch Versuche ermittelten Grenzwertes durch das Verhältnis an einem Behälter dieser und alle anderen Behälter gleichzeitig abgereinigt werden.

Der Druckverlustanstieg wird dann nur noch durch die auf die Filterelemente zurückzuführende Druckdifferenz hervorgerufen.

Grundidee der vorliegenden Erfindung ist es also, daß bei betriebsmäßig gleichzeitig durchströmten Gruppen von Filterelementen diese gleichzeitig abgereinigt werden, damit nicht bei nachfolgendem Reinigungsbetrieb der Filterelementgruppen eine Schieflage der Durchströmung durch die Filterelementgruppen auftritt.

Der durch das über die Filterelemente strömende Gas verursachte Druckabfall läßt sich gemäß der folgenden Formel von D'Arcy bestimmen:

$$(1) \quad \Delta p = \frac{\dot{V} \cdot \eta \cdot L}{A_F \cdot D_S}$$

Hierin bedeuten:

$\dot{V}$      der Volumenstrom des zu reinigenden Gases,

$\eta$      die Zähigkeit des zu reinigenden Gases,

$L$      die Dicke der Staubschicht + der Dicke der Filterwandung,

$A_F$      die Filteroberfläche,

$D_S$      eine Materialkonstante des Staubes.

Diese Gleichung findet sich z. B. in "Chemical Engineers' Handbook", 5th Ed. (Intern. Students Ed.), McGraw-Hill (1973) S. 5-54.

Der Volumenstrom kann z. B. durch Einbringen einer Meßblende in den gereinigten Gasstrom und durch Erfassung der Druckdifferenz über die Blende gemessen werden. Der Volumenstrom ist in an sich bekannter Weise proportional der Quadratwurzel aus der über die Blende gemessenen Druckdifferenz. Somit kann aus (1) das Verhältnis

$$(2) \quad \frac{\Delta p}{\dot{V}}$$

bestimmt werden und mit einem durch Versuche zu ermittelnden Festwert verglichen werden.

Dieses Verhältnis wächst beim Reinigungsbetrieb an, und durch Versuche wird der Grenzwert ermittelt, bei dem ein Auslösen des Reinigungsimpulses sinnvoll ist. Durch die erfindungsgemäße Verfahrensführung wird vermieden, daß alleine durch Volumenstromänderungen Reinigungsimpulse ausgelöst werden oder daß Reinigungsimpulse bei noch zu geringer Schichtdicke ausgelöst werden.

Die Intensität des Reinigungsimpulses wird im wesentlichen durch die Zusammenhaltekraft der die Schicht bildenden Staubkörner und durch die sich über die Filterelemente ausbildende und von außen nach innen gerichtete Druckdifferenz bestimmt. Dabei ist es von Vorteil, wenn in Abhängigkeit von der sich über die Filterelemente einstellenden Druckdifferenz der Druck des zugeführten Reinigungsgases so eingestellt wird, daß die Intensität der Reinigungsimpulse für ein Abreinigen ausreicht. Das Verhältnis und damit die Intensität wird durch Versuche bestimmt.

Weiterhin ist es von Vorteil, daß der Druckgasimpuls auf das Innere des einzelnen Filterelementes über eine sich nahe der Austrittsöffnung des Filterelementes öffnende oder in das Filterelement hineinerstreckende Düse aufgebracht wird.

Dabei wird weiter bevorzugt, daß eine sich zur Austrittsöffnung des Filterelementes diffusorartig erweiternde Düse eingesetzt wird, vorzugsweise eine sich exponential erweiternde Düse.

Durch den Einsatz einer Düse wird vermieden, daß sich der Druckimpuls kugelförmig von der an dem bisherigen blasrohr vorgesehenen Austrittsöffnung ausbreitet, sondern gerichtet in das Filterelement eingeleitet wird.

Das erfindungsgemäße Verfahren soll nun anhand der beigefügten Figuren näher erläutert werden. Es zeigen:

Fig.1 einen schematischen Längsschnitt durch einen mit Filterelementen bestückten Druckbehälter mit den für die Durchführung des Verfahrens am beispiel einer aufgeladenen Wirbelschichtfeuerung erforderlichen Meßstellen,

Fig.2 eine schematische Darstellung zur Erläuterung einer bevorzugten Bereitstellung des Reinigungsdrucks für mehrere Druckbehälter,

Fig.3 eine schematische Darstellung zur Erläuterung der Reinigung mit einer Vielzahl von parallel beaufschlagten Behältern,

Fig.4 eine Teildarstellung vergleichbar mit Fig.1 mit an den Blasrohren vorgesehenen Düsen und

Fig.5 eine Darstellung vergleichbar mit Fig.4 mit einer diffusorartig erweiterten Düse.

Bei einer druckaufgeladenen Wirbelschicht ist in einem Druckbehälter (1) eine Vielzahl von Filterelementen (2) derart angeordnet, daß sie von über eine Leitung (3) herangeführten staubbeladenen und unter einem Druck ($p_1$) stehenden Rauchgas von außen beaufschtagt werden. Während das Rauchgas in das Innere der Filterelemente (2) abströmt, verbteibt der Staub als Schicht (S) auf der Außenseite der Filterelemente. Das gereinigte und unter einem kleineren Druck $p_2$ stehende Rauchgas strömt in einen Sammelraum ein und verläßt den Behälter über eine Reingasleitung (4).

Nach Aufbau einer gewissen Schichtdicke müssen die Filterelemente abgereinigt werden. Dieses geschieht dadurch, daß das Innere der Filterelemente (2) von einem Druckimpuls beaufschtagt wird.

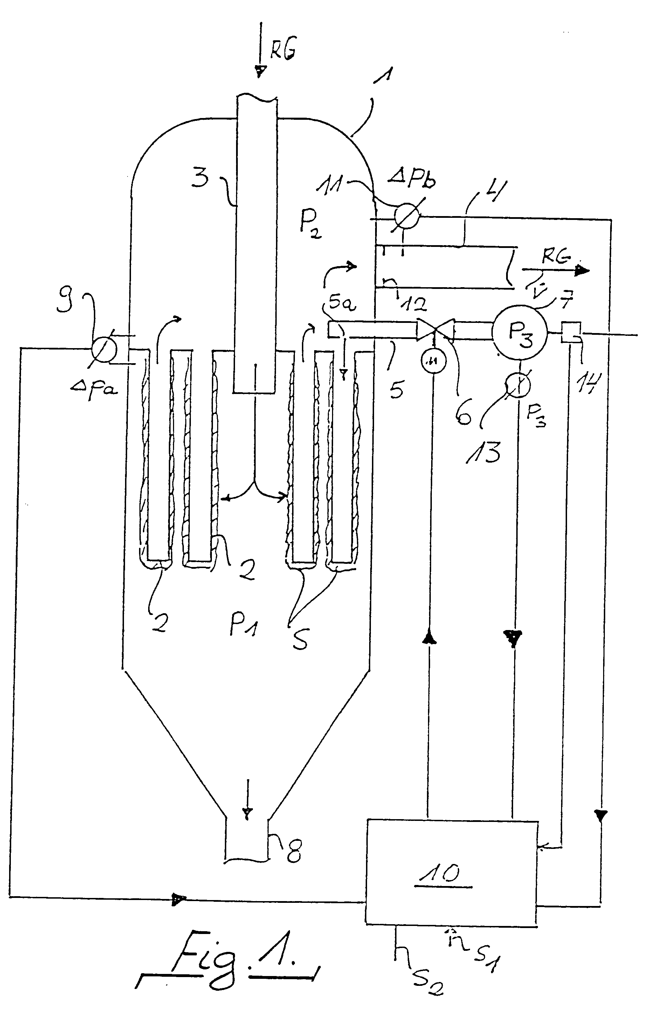

Zur Vereinfachung der Darstellung ist nur dem in der Fig.1 rechts dargestellten Filterelement (2) eine Abreinigungseinrichtung zugeordnet. Diese besteht aus einem Druckgasrohr (5) mit einer auf das Innere des Filterelementes ausgerichteten Austrittsöffnung (5a). Das Druckgasrohr ist über ein Magnetventil (6) mit einem unter einem Druck $p_3$ stehenden Druckgasbehälter (7) verbunden.

Beim öffnen des Magnetventils (6) wird in das Innere des Filterelements ein Druckimpuls einer solchen Intensität eingeleitet, daß der Staubkuchen von der Außenseite des Filterelements abgetragen wird. Die Intensität des Druckimpulses muß so groß sein, daß die Zusammenhaltekraft der Staubschicht und die entgegen gerichtete Druckdifferenz zwischen $p_1$ und $p_2$ überwunden wird. Der abgereinigte Staub wird über den Staubaustrag (8) abgezogen.

Wie aus der Fig.1 ersichltich ist, wird über ein Differenzdruckmeßgerät (9) der Differenzdruck $\Delta p_a = p_1 - p_2$ gemessen, und das entsprechende Drucksignal einer Steuer- und Regeleinheit (10) zugeführt. Weiterhin wird mittels eines Druckdifferenzmeßgerätes (11) der Differenzdruck über eine in dem Reingasabführungsrohr (4) angeordnete Meßblende (12) gemessen. Dieser Differenzdruck $\Delta p_b$ ist ein Maß für den Volumenstrom $\dot{V}$ des durch den Druckbehälter (1) strömenden Rauchgases entsprechend

$$(3) \qquad \dot{V}_{RG} \sim \sqrt{\Delta p_b}$$

Das Ausgangssignal des Differenzdruckmeßgerätes (11) wird ebenfalls der Steuer- und Regeleinrichtung (10) zugeleitet. Dieser wird ein durch Versuche bestimmter oberer Grenzwert als Sottwert $S_1$ zugeführt. Wenn während des Betriebs das Verhältnis von $\Delta p_a/\dot{V}_{RG}$ diesen Grenzwert erreicht, wird das Magnetventil (6) angesteuert.

Um in Abhängigkeit von der Druckdifferenz $\Delta p_a$ das Filterelement (2) mit einem Reinigungsdruckimpuls ausreichender Intensität beaufschlagen zu können, wird mittels eines Meßgerätes (13) der Vorratsdruck $p_3$ gemessen. Das Steuer- und Regelgerät (10) bildet das Verhältnis zwischen dem Druck $p_3$ und dem Außendruck

$p_1$ der Filterelemente und vergleicht dieses mit einem durch Versuche ermittelten und der Steuer- und Regeleinrichtung vorgegebenen Sottwert $S_2$. Reicht der Druck $p_3$ nicht aus, wird der Behälter (7) über ein Druckregelventil (14) von einer in der Fig. 1 nicht gezeigten Druckquelle her mit einem höheren Druck beaufschtagt. Vorzugsweise erfolgt also die Auslösung des Magnetventils (6) erst, wenn das Druckverhältnis $p_3/p_1$ den durch Versuche ermittelten Wert ($S_2$) erreicht hat.

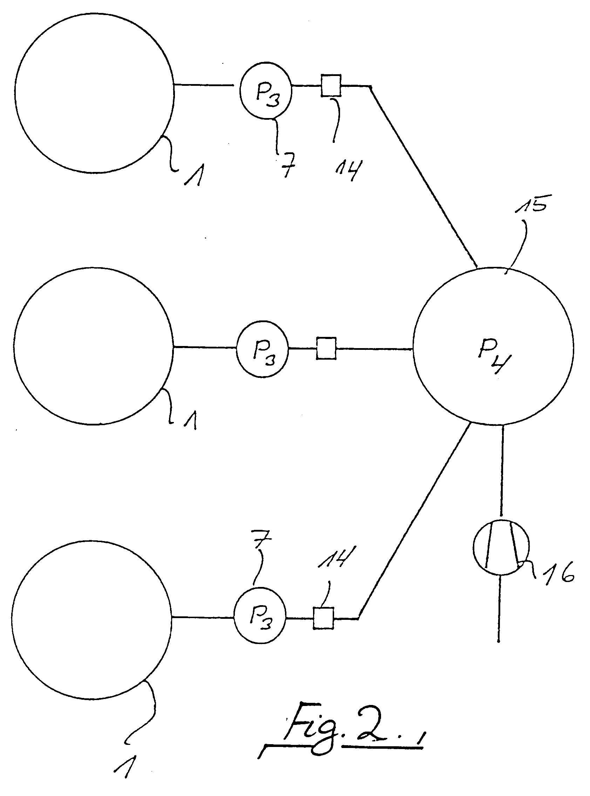

In der Fig. 2 ist schematisch dargestellt, wie die Reinigungsdruck-Vorratsbehälter (7) einer Vielzahl von Druckbehältern (1) von einem Hauptbehälter (15) her mit dem erforderlichen Reinigungsdruck beaufschlagt werden können. Der Behälter (15) wird mittels eines Kompressors (16) auf einem Druck $p_4$ gehalten, der für die Einstellung aller möglichen Druckwerte $p_3$ ausreicht. Jeder der Druckbehälter (1) ist mit der in der Fig. 1 dargestellten Beschattung versehen.

Die Verknüpfung der Meßwerte und vorgegebenen Sollwerte im erfindungsgemäßen Sinne in der Steuer- und Regeleinrichtung braucht nicht genauer beschrieben zu werden, da sie im Rahmen fachmännischen Handelns liegen.

Die Druckdifferenz über die Filterelemente (2) kann durch ein der Leitung (3) vorgeschaltetes Druckgebläse oder durch ein der Reingasleitung (4) nachgeschaltetes Saugzuggebläse aufgebaut werden. Es kommt nur auf den Aufbau der Druckdifferenz über die Filterelemente an.

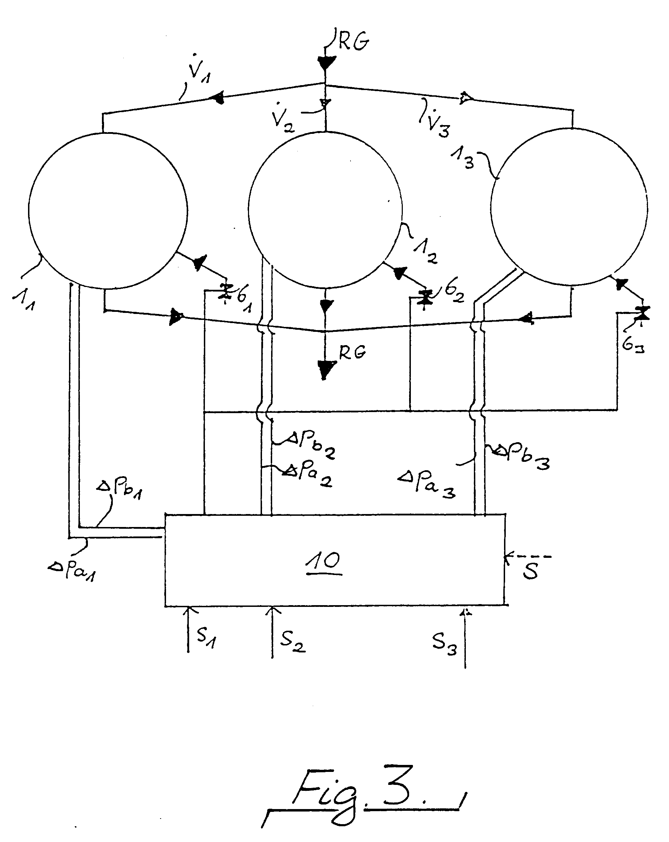

In der Fig.3 ist eine Reinigungsvorrichtung mit drei Behältern ($1_1$, $1_2$, $1_3$) dargestellt, die parallel von dem zu reinigenden Rauchgas (RG) beaufschlagt werden. Den Behältern sind die Meßeinrichtung (9) und (11) zugeordnet und entsprechende Drucksignale $\Delta p_{ai}$ und $\Delta p_{bi}$ für i = 1,2 und 3 werden dem Steuer- und Regelgerät (10) zugeleitet. Von diesem Gerät her sind die Magnetventile ($6_1$, $6_2$ bzw. $6_3$) ansteuerbar.

Aus den zugeführten Druckdifferenzen bestimmt das Steuer- und Regelgerät fortlaufend die Verhältnisse $\Delta p_{ai}/\dot{V}_i$ für i = 1,2 und 3 und vergleicht diese mit einem für den einzelnen Behälter vorgegebenen Grenzwert ($S_i$). Falls die Behälter im wesentlichen baugleich sind, werden die ermittelten Grenzwerte ($S_i$) im wesentlichen gleich sein, so daß für alle Behälter ein gemeinsamer Grenzwert (S) vorgegeben werden kann. Wenn eines der Verhältnisse diesen Grenzwert erreicht, werden alle Magnetventile ($6_1$, $6_2$ und $6_3$) angesteuert, so daß die Abreinigung der Behälter gleichzeitig erfolgt.

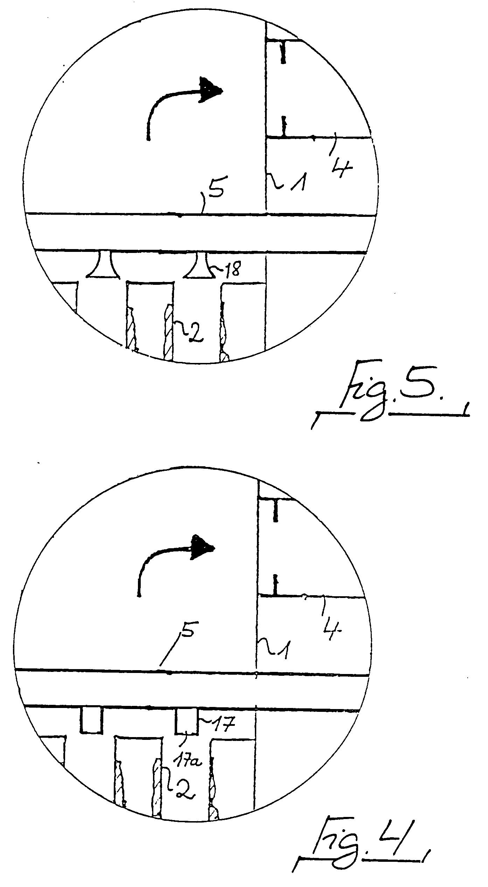

Während in der Fig.1 rein schematisch nur ein Druckgasrohr (5) mit einer auf das Innere des Filterelementes ausgerichteten Austrittsöffnung (5a) dargestellt ist, ist in den Fig.4 und 5 ein sich über mehrere Filterelemente (2) erstreckendes Druckgasrohr (5) dargestellt. Mit dem Druckgasrohr (5) sind bei der Ausführungsform gemäß Fig.4 einzelne gerade Düsen (17) verbunden, deren Blasöffnung (17a) in der Nähe der Austrittsöffnung des Filterelementes (2) liegt. Die Düsen (17) können sich auch in das einzelne Filterelement hineinerstrecken. Bei dieser Ausführungsform wird vermieden, daß sich eine kugelförmige Druckimpulswelle wie an der Öffnung (5a) gemäß Fig.1 ausbildet, d.h. es wird der Abreinigungsimpuls besser in das einzelne Filterelement hineingetragen.

Bei der Ausführungsform gemäß Fig.5 sind mit dem Druckgasrohr einzelne diffusorartig ausgebildete Düsen (18) verbunden, die jeweils auch einem Filterelement (2) zugeordnet sind. Auch bei dieser Ausbildung der Düsen wird eine bessere Ausnutzung des Reinigungsimpulses erzielt.

## Patentansprüche

1. Verfahren zum Entstauben eines staubhaltigen Gases mittels mindestens eines Behälters und in diesem angeordneter und für Gas durchlässiger Filterelemente, bei dem die Filterelemente von außen nach innen von dem Gas durchströmt werden und der Staub auf der Außenfläche der Filterelemente abgelagert wird und der abgelagerte Staub durch auf das Innere der Filterelemente aufgebrachte Druckgasimpulse von den Filterelementen abgereinigt wird, wobei die über die Filterelemente anstehende Druckdifferenz gemessen wird und für den Behälter zusätzlich zu der Druckdifferenz über die Filterelemente der Volumenstrom des zu reinigenden Gases bestimmt wird und der Reinigungsimpuls ausgelöst wird, wenn das bei der Ausbildung der Staubschicht über die Zeit anwachsende Verhältnis von Druckdifferenz und Volumenstrom mindestens einen Grenzwert erreicht hat, **dadurch gekennzeichnet**, daß bei einer Vielzahl von mit Teilströmen ($V_i$) des zu reinigenden Gases parallel beaufschlagten Behältern ($1_i$) die bei der Ausbildung der Staubschicht über die Zeit anwachsenden Verhältnisse von Druckdifferenz ($\Delta p_{ai}$) und der Volumenströme ($\dot{V}_i$) der einzelnen Teilströme erfaßt werden und bei Erreichung eines durch Versuche ermittelten Grenzwertes (S; $S_i$) durch das Verhältnis an einem Behälter dieser und alle anderen Behälter gleichzeitig abgereinigt werden.

2. Verfahren nach Anspruch 1, **dadurch gekennzeichnet**, daß in Abhängigkeit von der sich über die Filterelemente (2) einstellenden Druckdifferenz ($\Delta p_a$) der Druck ($p_3$) des zugeführten Reinigungsgases so eingestellt wird, daß die Intensität der Reinigungsimpulse für ein Abreinigen ausreicht.

3. Verfahren nach Anspurch 1 oder 2, **dadurch gekennzeichnet**, daß der Druckgasimpuls auf das Innere

**4**

des einzelnen Filterelementes (2) über eine sich nahe der Austrittsöffnung des Filterelementes (2) öffnende oder in das Filterelement hineinerstreckende Düse (17; 18) aufgebracht wird.

4. Verfahren nach einem der Anspruüche 1 bis 3, **dadurch gekennzeichnet**, daß eine sich zur Austrittsöffnung des Filterelementes (2) diffusorartig erweiternde Düse (17) eingesetzt wird.

## Claims

1. A method of removing dust from a dust-laden gas by means of at least one tank and gas-permeable filter elements disposed in said tank, with which the gas is flowing through the filter elements from the outside to the inside thereof and the dust is deposited on the outer surfaces of the filter elements and the deposited dust is removed from the filter elements by pressurized gas pulses applied to the interior of the filter elements, whereby the pressure differential that occurs across the filter elements is measured and, for the tank, in addition to the pressure differential across the filter elements, the volume flow of the gas to be cleaned is determined, and the cleaning pulse is released, when the ratio of pressure differential to the volume flow, which ratio increases with time during formation of the dust layer, reaches at least one limiting value, **characterized in that** in case of a plurality of tanks ($1_i$) being supplied in parallel with partial streams ($V_i$) of the gas to be cleaned, the ratios of pressure diffentials ($\Delta p_{ai}$) and the volume flows ($\dot{V}_i$) of the individual partial streams, which ratios increase with time during formation of the dust layer, are determined and, when the determined ratio of one of said tanks reaches an experimentally determined limiting value ($S$; $S_i$), this tank and all of the other tanks are simultaneously cleaned.

2. The method according to claim 1, **characterized in that** in dependancy from the pressure differential ($\Delta P_a$) obtained across the filter elements (2) the pressure ($p_3$) of the supplied cleaning gas is set in such a way that the intensity of the cleaning pulses is sufficient for cleaning.

3. The method according to claim 1 or 2, **characterized in that** the pressure pulse is applied to the interior of the individual filter element (2) by means of a jet nozzle (17; 18) opening out in the vicinity of the outlet opening of the filter element (2) or extending into said filter element.

4. The method according anyone of claims 1 to 3, **charcterized in that** a jet nozzle (17) widening in a diffuser-like manner in a direction toward the outlet opening of the filter element (2) is used.

## Revendications

1. Procédé pour dépoussiérer un gaz chargé de poussière à l'aide d'au moins un récipient et d'éléments filtrants disposés dans ce dernier et perméables au gaz, dans lequel les éléments filtrants sont traversés par le gaz de l'extérieur à l'intérieur et la poussière se dépose sur la surface extérieure des éléments filtrants et dans lequel les éléments filtrants sont nettoyés, par séparation de la poussière déposée, par des impulsions de gaz sous pression appliquées à l'intérieur des éléments filtrants, la différence de pression agissant sur les éléments filtrants étant mesurée et le débit volumétrique du gaz à épurer pour le récipient étant déterminé en plus de la différence de pression agissant sur les éléments filtrants et l'impulsion de nettoyage étant déclenchée lorsque le rapport entre la différence de pression et le débit volumétrique, qui croît à la longue en raison de la formation de la couche de poussière, a atteint au moins une valeur limite, **caractérisé en ce que**, plusieurs récipients ($1_i$) étant soumis en parallèle à l'action de courants partiels ($V_i$) du gaz à épurer, on évalue les rapports, qui croissent à la longue en raison de la formation de la couche de poussière, entre la différence de pression ($\Delta pa_i$) et les débits volumétriques ($V_i$) des différents courants partiels et, lorsqu'est atteinte une valeur limite ($S$ ; $S_i$) déterminée par des essais, le rapport relatif à l'un des récipients détermine le nettoyage simultané de celui-ci et de tous les autres récipients.

2. Procédé selon la revendication 1, **caractérisé en ce que** la pression ($p_3$) du gaz de nettoyage introduit est réglée de façon telle, en fonction de la différence de pression ($\Delta pa$) qui s'établit sur les éléments filtrants (2), que l'intensité des impulsions de nettoyage suffise pour un nettoyage complet.

3. Procédé selon la revendication 1 ou 2, **caractérisé en ce que** l'impulsion de gaz sous pression est appliquée à l'intérieur de chaque élément filtrant (2) par l'intermédiaire d'une buse (17 ; 18) qui débouche au voisinage de l'ouverture de sortie de l'élément filtrant (2) ou qui pénètre à l'intérieur de l'élément filtrant.

4. Procédé selon l'une des revendications 1 à 3, **caractérisé en ce qu'**on utilise une buse (17) qui s'élargit à la façon d'un diffuseur vers l'ouverture de sortie de l'élément filtrant (2).

*Fig.1.*

Fig.2.

Fig. 3.

_Fig.5._

_Fig.4_